# EUROPEAN PATENT APPLICATION

(11) **EP 0 957 597 A2**
(43) Date of publication of application: **17.11.1999**
(21) Application number: 99108814.7
(22) Date of filing: 04.05.1999
(51) Int. Cl.: H04H 1/00

(54) **System in broadcasting station and receiving machine for the system**

(30) Priority: 07.05.1998 JP 12505298; 25.06.1998 JP 19509398
(71) Applicant: Matsushita Electric Industrial Co., Ltd., Kadoma-shi, Osaka 571-8501 (JP)
(72) Inventor: Nishi, Hiroyuki, Tokyo, 168-0065 (JP)
(74) Representative: Kügele, Bernhard

(57) **Abstract**

A broadcasting system includes a content data base storing a content produced by an authoring tool, distribution-schedule-production-section for producing a schedule of distributing the content, a program control section for controlling an on-air time of an on-air program. The system also includes an SI creator for creating supplementary information to a program regarding a content distribution service, a content transmission protocol creating section, content-distribution-information-creating section for creating information regarding the content distribution that is utilized when a receiving machine obtains and updates the content, and a transmitter that transmits the created information.

## Description

### Field of the Invention

The present invention relates to data broadcasting in digital broadcasting system, and more particularly to a broadcasting system which handles mono-media data constituting contents as a file integratedly and a receiving machine for this system.

### Background of the Invention

Data broadcasting is to distribute a content other than transmitted ordinal on-air programs to audiences. First, a broadcasting service and transmission protocol in a conventional data broadcasting is described hereinafter. An example of data distribution by broadcasting is home-page distribution and electronic newspaper distribution. The home page distribution service has been already available in an analog form at some broadcasting stations, and an information distribution service has been also available to some users having a dedicated receiving machine to this service. A multimedia application (hereinafter referred to as MM application) distributed by the data broadcasting can be produced by several methods such as Java, HTML, MHEG and the like. The selection of these methods is left to users.

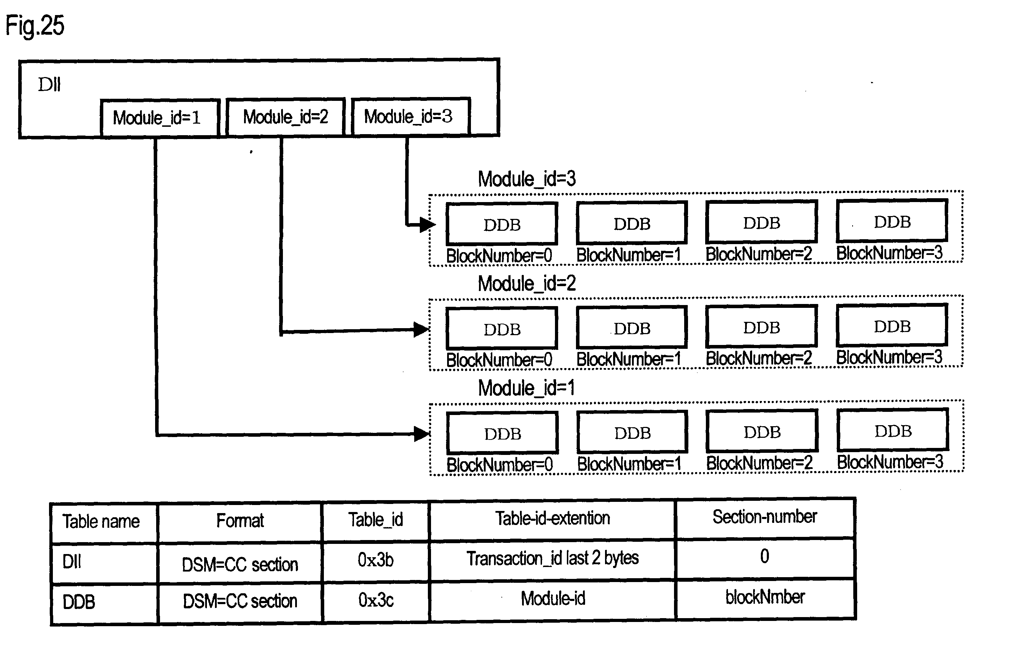

Protocol of data transmission in digital broadcasting has employed DSM-CC data carousel (hereinafter referred to as a data carousel) specified by ISO13818-6. The data carousel groups data into logical units, i.e. modules, and divides the modules into physical units, i.e. blocks. When data are transmitted, they are handled in this block unit. A broadcaster transmits this block repeatedly to an audience. The receiver receives the data block by block, and assembles them into a module again. The data carousel defines two tables to realize this transmission method, i.e. one is Download Data Indication (DII), and the other is Download Data Block (DDB). DII has a module ID and a pointer to DDB that carries a substance of the module. A module to be transmitted is divided into blocks of a given size (block size), and the blocks are packed into DDB for transmission. DDBs are repeatedly transmitted. Fig. 25 illustrates a relation between the two tables, namely, DII and DDB specified by ISO13818-6. Module ID based on table_id_extension of DDB is used for identifying modules. In the data carousel method, a receiving machine filters the transmitted data with a module ID, so that the receiving machine can receive the data in a unit of module with ease.

However, the conventional data broadcasting method discussed above does not have a common platform, therefore, the receivers must prepare a dedicated receiving machine.

The conventional distribution method of home pages does not have a way to link the MM application to an ordinal program, which makes it impossible to produce an MM application linked to an ordinal program.

The broadcaster does not instruct receiving machines to select a specific module out of a large number of modules as far as it employs the data carousel method. The data carousel method thus does not permit the receiving machines to select a desired data out of distributed data, so that an efficient delivery of content on a selective base is not expected by this method.

Since data are filtered in a module unit, the receiving machine cannot extract a specific data contained in a module, which lowers efficiency. In fact, DII is transmitted in one section, which contains maximum only ca. 100 modules. When a prospective future of data broadcasting is considered, the size of DII is too small for a data size to be transmitted.

### Summary of the Invention

The present invention addresses the problems discussed above and aims to provide a broadcasting system and a receiving machine therefor.

The broadcasting system of the present invention comprises the following elements:
(a) a content data base (DB) for storing a content produced by an authoring tool;
(b) a distribution schedule production section for producing a schedule of distributing a content;
(c) a program control section for controlling on-air times of programs;
(d) an SI creator for creating information supplementary to a program (SI information) about the content distribution service;
(e) a protocol creating section for creating a protocol for transmitting a content;
(f) a content-distributing-information-creating-section for creating information about content distribution which a receiving machine utilizes when obtaining and updating a content; and
(g) a transmitter for transmitting created information.

The receiving machine of the present invention comprises the following elements:
(a) a receiving section for receiving the data transmitted by a broadcasting station;
(b) a filter for selecting desirable contents out of transmitted data, and obtaining the selected contents;
(c) a file updating section for updating contents automatically;
(d) a timer for notifying EPG application of an instructed time;
(e) file storage controller for converting a file sent in a transmission format into an original file format, and storing the file in the original format; and
(f) a file name controller for controlling names and locations of files, and providing an application on an upper level of a hierarchy system with a general purpose interface.

The broadcasting system of the present invention transmits data constituting a content in a unit of file, and the receiving machine of the present invention has an interface for accessing mono-media-data as a file. This structure allows the broadcasting system to distribute contents independent of an authoring tool.

Further, the broadcasting system of the present invention notifies in advance the receiving machine of an updating time based on the content-distribution- information-table. This structure allows the system to update contents automatically, and also to save power.

Still further, the broadcasting system of the present invention defines information to be linked with an on-air program as a file, thus the receiving machine can link an MM application with an on-air program with ease.

The broadcasting system of the present invention also utilizes the data-carousel-protocol as a protocol for the content transmission. In this case, the broadcasting system notifies the receiving machine in advance of the following two items: (a) Is the content-distribution-information-table updated in a unit of module, or (b) updated in a unit of file ?

In a case of updating in a unit of module, a module ID to be updated is supplemented to the content-distribution-information-table. When updated in a unit of file, the updating information is added to DII.

This structure allows the receiving machine to selectively receive a desirable module, or a desirable file.

### Brief Description of the Drawings

Fig. 1 is a block diagram of a broadcasting system in accordance with a first exemplary embodiment of the present invention.
Fig. 2 shows an image of a weather-report-screen by MM application.
Fig.3 shows a content structure of the weather-report by MM application.
Fig.4 shows content-control-information controlled by content-data-base 102.
Fig.5 shows content-schedule-information controlled by distribution-schedule-production section 103.
Fig.6 is a flowchart depicting a process of creating a data format for content transmission by content-transmission-protocol-creating-section 106.
Fig.7 shows a structure of data constituting a content-distribution-information-table produced by content-distribution-information-creation-section 107.
Fig.8 shows a data structure illustrating linkage relations between an SI table, a content-distribution-information-table, and a transmission-format of a distribution-file-list.
Fig.9 is a block diagram of a receiving machine in accordance with a first, second and third exemplary embodiments of the present invention.
Fig.10 is a flowchart depicting a process by the receiving machine such as receiving a content through storing it.
Fig.11 is a flowchart depicting a process by an MM player for reproducing the content stored in the receiving machine.
Fig.12 is a flowchart depicting an automatic updating by the receiving machine when the content is updated.
Fig.13 shows content-control-information controlled by content-data-base 102 in accordance with a second exemplary embodiment of the present invention.
Fig.14 is a flowchart depicting a process of registering a content into content-data-base 102 in accordance with the second exemplary embodiment of the present invention.
Fig.15 is a flowchart depicting a process by file storage controller 905 when the receiving machine receives an on-air program as one data constituting a content.
Fig.16 shows stream-file-control-information controlled by file-name-controller 906 of the receiving machine.
Fig.17 is a block diagram of a broadcasting system in accordance with a third exemplary embodiment of the present invention.
Fig.18 shows a format structure of file transmission.
Fig.19A shows a data structure of content-distribution-information constituting the content-distribution-information-table produced by content-distribution-information-creating section 107.
Fig.19B shows a data structure illustrating linkage relations of the data carousel.
Fig.20 is a flowchart depicting an updating process by the receiving machine utilizing filtering information.
Fig.21 shows content-schedule-information including the information on a selective-base controlled by distribution-schedule-creating-section 103.
Fig.22 shows content-schedule-information including selected supplemental information controlled by distribution schedule creating section 103.
Fig.23 shows content-schedule-information including version supplemental information controlled by distribution schedule creating section 103.
Fig.24 shows a data structure of content-distribution-information including valid-period-information constituting the content-distribution-information-table produced by content-distribution-information-creating section 107.
Fig.25 is a block diagram of a conventional broadcasting system.

### Detailed Description of the Exemplary Embodiments

### (Exemplary Embodiment 1)

The broadcasting system of the present invention can handle a wide range of general contents which are independent of a specific authoring tool. Before an embodiment of the broadcasting system is described, a structure of a general content is discussed hereinafter.

A content, in general, comprises a plurality of mono-media.

A mono-media file is supplied from an authoring tool, which converts text data constituting a content and mono-media such as a still-picture-data into a file on a recording media so that the mono-media file can be transferable.

The content can be reproduced by a multimedia player (hereinafter called an MM player). When reproducing, the MM player accesses the files using a file name in order to identify the files. In the case of broadcasting, the MM player is disposed in the receiving machine.

In order to make the description more simple and clear, an application of a weather report is used as an example of content distribution. A weather report is an application utilizing a content stored in the receiving machine, and being able to provide a user with the latest weather report at any time.

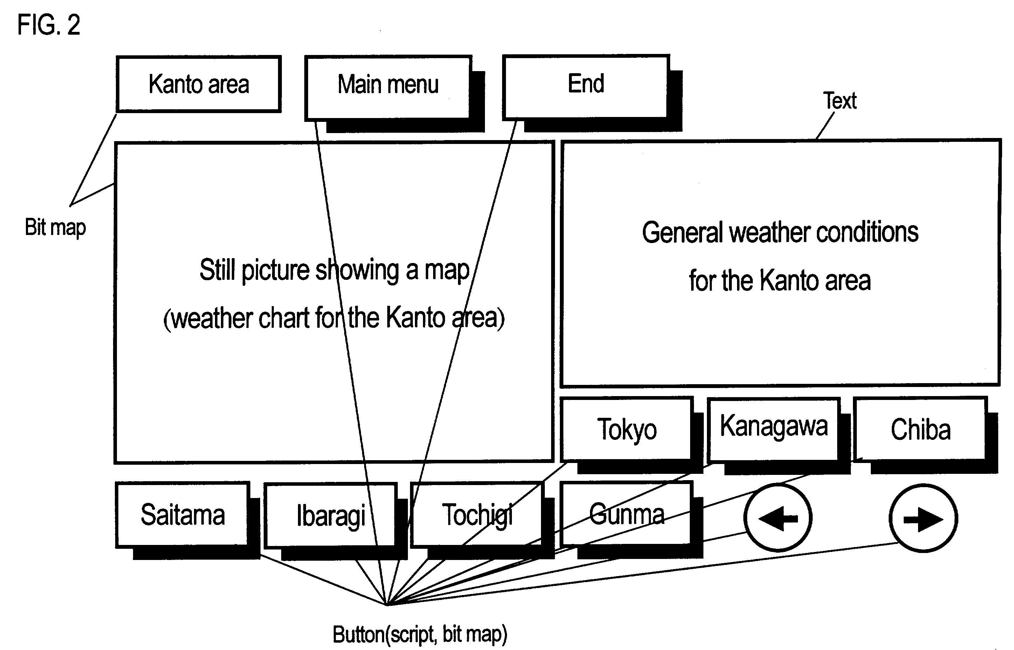

Fig. 2 shows an image of a weather-report-screen when the application of weather report starts operating.

For instance, the weather report comprises the following elements:
(a) a map showing a given area (e.g. Kanto area including Tokyo, Chiba, Kanagawa, and Saitama prefectures);
(b) text depicting weather information; and
(c) a selecting button with which a user can select a desirable area.

The weather information is updated periodically. In this embodiment, the information is updated every 30 minutes. The user is thus able to obtain the latest weather report when depressing a button to select a desirable area.

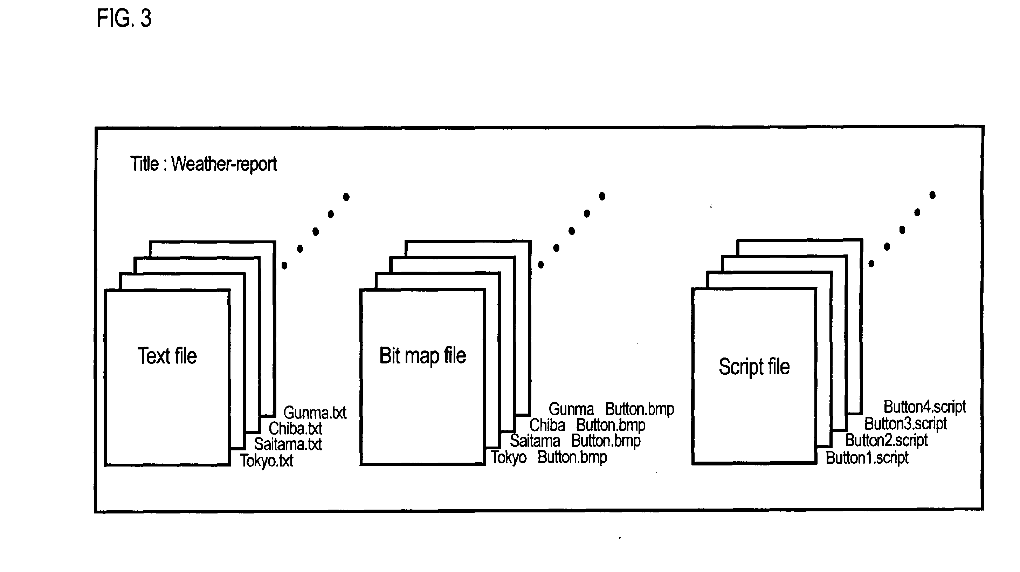

Fig. 3 shows a general structure of a content.

The content comprises the following mono-media files:
(a) still picture files;
(b) text files; and
(c) script files necessary for the MM player to reproduce the content.

Fig. 3 shows a weather report and its content comprises the following elements:
A map illustrating weather reports;
Images indicating selecting buttons and the like (bit map file);
Text describing the weather reports; (text file) and
A script indicating a process for a user's depressing the button.

Each file has a name necessary for the MM player to access the file when the file is reproduced by the MM player. Each content also has a title representing its substance. A content producer names the files and contents using the authoring tool, or the authoring tool automatically names them.

The present invention relates to a broadcasting system that distributes a content comprising a plurality of files and a receiving machine for this broadcasting system. These content and files are named as discussed above.

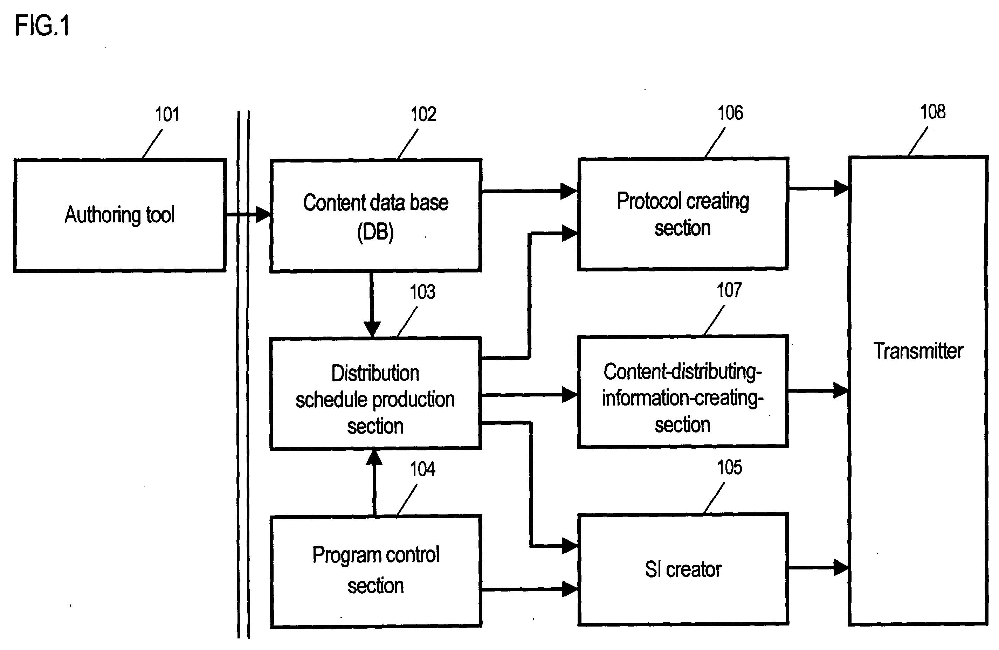

Fig. 1 is a block diagram of a broadcasting system in accordance with the exemplary embodiment.

The broadcasting system shown in Fig. 1 comprises the following elements:
(a) authoring tool 101 for producing a general content discussed above;
(b) content-data-base 102 (hereinafter called CDB 102) for storing the content produced by authoring tool 101;
(c) distribution schedule production section 103 (hereinafter called DS production section 103) for producing a schedule of distributing the content; The content is distributed from the broadcasting station according to the schedule produced by DS production section 103.
(d) a program control section 104 (hereinafter called controller 104) for controlling programs and organizing thereof;
(e) SI creator 105 creates supplementary information to an ordinary program (SI information) about the content distribution service;
(f) content transmission protocol creating section 106 (hereinafter called TP creator 106) for converting a content to a distributable format;
(g) content distribution information creating section 107 (CDI creator 107) for creating the information about content distribution to be transmitted to the receiving machine; this information is utilized when the receiving machine obtains and updates the content; and
(h) transmitter 108 for transmitting the information created by SI creator 105, TP creator 106 and CDI creator 107.

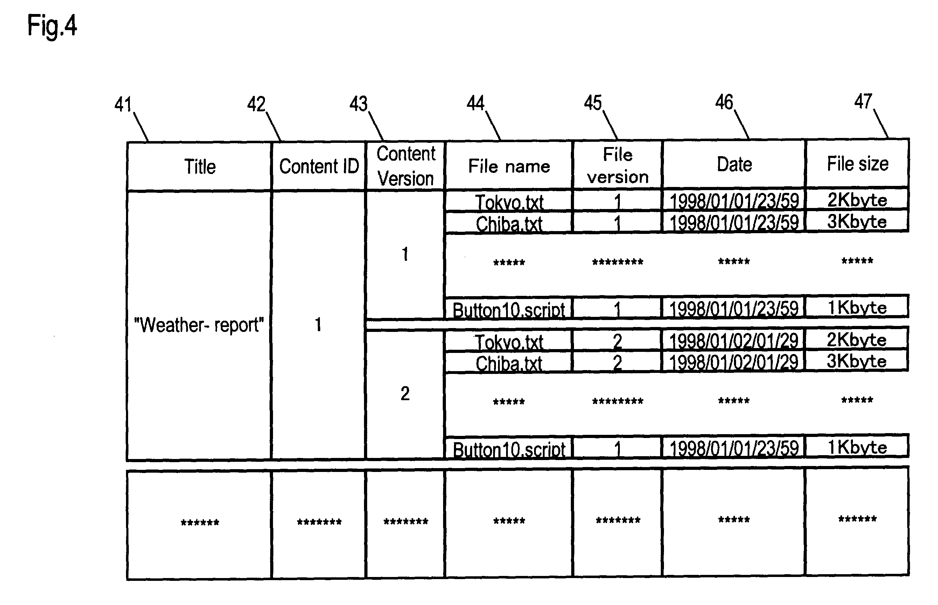

Fig. 4 shows content-control-information controlled by content-data-base 102. The information comprises the following elements:
(a) title 41 for identifying a content produced by authoring tool 101; (an example of the title is "weather report")
(b) content ID42 being an identifier assigned by CB102 to the content; (The content distribution system identifies the content with this content ID42.)
(c) content version 43 being one of content versions, and controlled by CDB 102. (This content version 43 is updated by CDB 102 whenever authoring tool 101 re-registers a content having a same title.)
(d) file name 44 being a name of a mono-media file and named by authoring tool 101; (This name is utilized when the MM player reproduces the content.)
(e) file version 45 being one of file versions, and controlled by CDB 102 as content version 43 is controlled; CDB 102 stores files so that the file can be obtained with the keys of content ID42, file name 44 and file version 45.
(f) date 46 being a date and time when a file is stored or updated;
(g) file size 47 being a storing size; When storing a file, CDB 102 measures a size and registers it.

In the example shown in Fig. 4, two versions of weather reports are registered. When at least one of the files constituting a content is updated, a content version is also updated. (The weather report is updated every 30 minutes.)

Authoring tool 101 registers a content to CDB 102 using the following items as parameters:
title 41 of the content, files constituting the content and a list of the file names 44.

When authoring tool 101 registers a content for the first time, all the files making up the content and a list of the file names should be parameters. When authoring tool 101 changes the content already registered, the changed file and the file name list including the changed file name should be parameters. (The files unchanged are not included in the name list.)

In the case of weather report, basic bit-map-picture-files such as the selecting buttons are not changed; however, the text file depicting the latest weather report is frequently updated.

When the weather report is registered for the first time, all the files including the bit-map-picture-file are registered. Regarding an updating from this onward, authoring tool 101 may only register a name and substance of a text file depicting weather information to CDB102.

When updating a content, CDB 102 merges a substance registered in advance with an updated substance, then updates content version 43 and file version 45 already updated, and finally registers them as a new version.

Since date 46 shows a date when the file was stored, only the updated files get new dates. In the weather report version 2 shown in the example of Fig. 4, "Tokyo.txt", and "Chiba.txt" indicating the weather information have been updated, the data thereof are also updated. "Button10.script" is not updated, its date remains the same as it was.

When a file, one of elements of a content, is deleted, a command name indicating a deletion and the name list of files to be deleted are supplemented to the registered parameters. When receiving the deleting command, CDB 102 deletes the file corresponding to the name and merges a substance of a content registered previously with a substance just updated.

As such, an interface between authoring tool 101 and CDB 102 uses title names, file names constituting the content and its file name list as parameters. The interface thus does not depend on an authoring tool.

When the weather report is updated every 30 minutes, a new content version 43 is produced in a content-control-table every 30 minutes, and only a text file including the latest weather report is updated.

An on-air channel is identified with an identifier "service_id" in ETS 300 468 "Digital Video Broadcasting (DVB); Specification for Service Information(SI) in DVB systems". Physical transmission information constitutes PSI which is required to air a program in MPEG 2 transport stream, and comprises an identifier (TS_id) of a transponder and PID of a transmission stream. Controller 104 controls the information of organizing programs and physical transmission information. Organizing information is the information about on-air schedule of programs and a channel No. which airs the program.

Controller 104 assigns the following items to the content:
(a) On-air time span for distributing the content (information about in which time span the content is distributed);
(b) Channel No.; and
(c) PID.
Controller 104 informs DS creator 103 of these assigned items.

DS creator 103 determines a schedule of distributing the content within the assigned on-air time span.

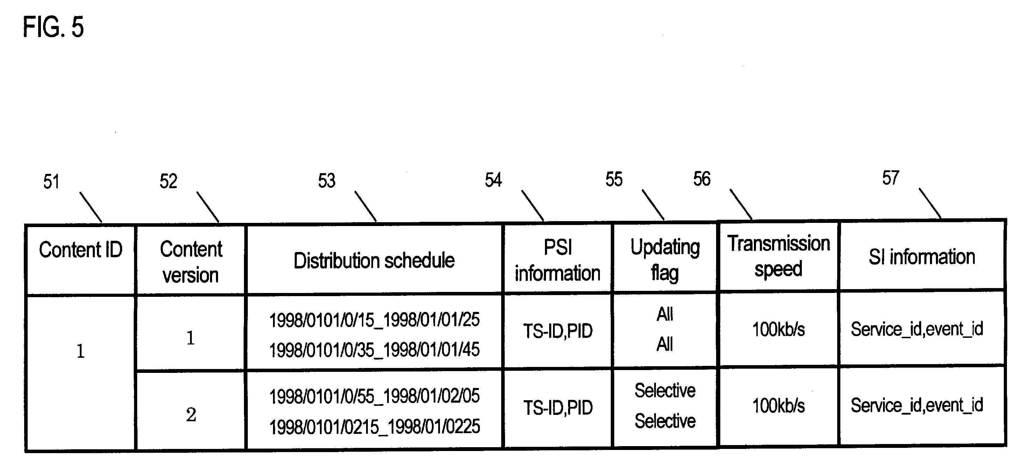

Fig. 5 shows content-schedule-information controlled by distribution-schedule-production section 103.

Content ID51 identifies a content. Content version 52 indicates a version of a content. Distribution schedule 53 indicates when a content is distributed. PSI information 54 indicates the information for creating PSI (Program Specific Information specified by ISO13818-1) necessary for distributing a content through broadcasting. Updating flag 55 indicates whether all the files constituting a content should be distributed or only updated files should be distributed at the content distribution. Transmission speed 56 shows a transmission speed of a content distribution. SI information 57 is a service_id (channel identifier) when a content is distributed through broadcasting.

An operator determines distribution schedule 53, PSI information 54, transmission speed 56 and service_id 57 based on the program organizing information obtained from controller 104. Content-schedule-table is drawn by an operation terminal (not shown) of the broadcasting station based on the data supplied to DS creator 103.

Fig. 5 is a content-schedule-table of the weather report application. In this example, a content is distributed for 10 minutes every 10 minutes, and the latest weather report is updated every 30 minutes. According to the distribution schedule, all the files can be distributed on an X-time cycle by using the updating flag, and only a changed portion can be distributed in between. For instance, the weather report can be distributed three times in an hour, and all the files are distributed on a six-time cycle, but a changed portion can be only distributed in between. In this case, the receiving machine must spend ca. two hours for receiving the entire weather report application; however, once the application is obtained, the files received by the receiving machine can be efficiently updated through the selective distribution method.

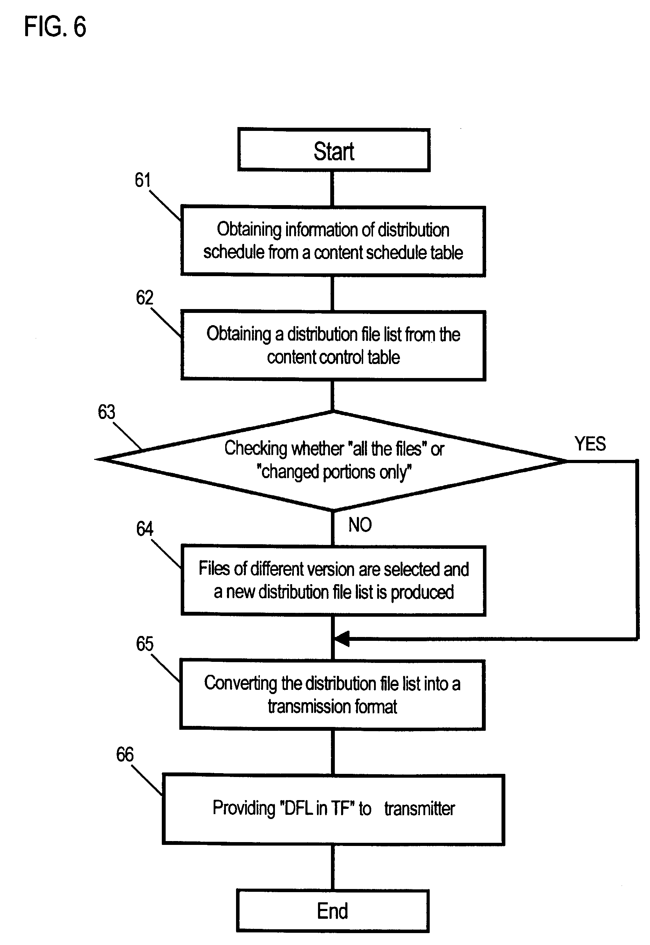

Fig. 6 is a flowchart describing a process of creating a data format for content transmission by TP creator 106. In this example, a group of files constituting a content is formatted into a transmission format. This content is identified with a content ID and a content version.
Step 61: Obtaining information of distribution schedule from a content schedule table of DS creator 103 by using a content ID and a content version;
Step 62: Obtaining a distribution file list (including a file name, file version, file substance, date) constituting the content from the content control table controlled by CDB 102 by using the content ID and content version;
Step 63: Checking whether a transmission on a schedule table includes "all the files" or "changed portions only", in case of "all the files", go to Step 65.
Step 64: When the transmission carries only "changed portion", a file version in a distribution file list obtained in Step 72 is compared with a version of files constituting the previous version (the latest version sent by TP creator 106) of the content. Then files of different version are selected and a new distribution file list (including a file name, file version, file substance and data) is produced. TP creator 106 has transmission logs for respective contents, and controls what the latest version is.
Step 65: Converting the distribution file list into a transmission format by using PSI information on the content schedule table and a transmission speed; Regarding a data transmission format, DVB SI-DAT has been studied; however, DSM-CC data carousel (ISO13818-6) and object carousel (ISO13818-6) are also available.
Step 66: Providing a distribution file list in the transmission format (hereinafter called "DFL in TF"), a corresponding distribution time on the schedule table and a transmission speed to transmitter 108;

Another operation on Step 66 is available depending on a specification of transmitter 108; i.e. TP creator 106 holds DFL in TF until its distribution time, and provides it to transmitter 108 when the distribution time comes. PMT (program mapping table) corresponding to the DFL in TF can be produced if PID, TS_id and a transmission schedule of a stream are identified. Thus PMT can be produced in the content-transmission-protocol-creating section. PMT can be also produced by another sub-system of the broadcasting station, which obtains the information from controller 104.

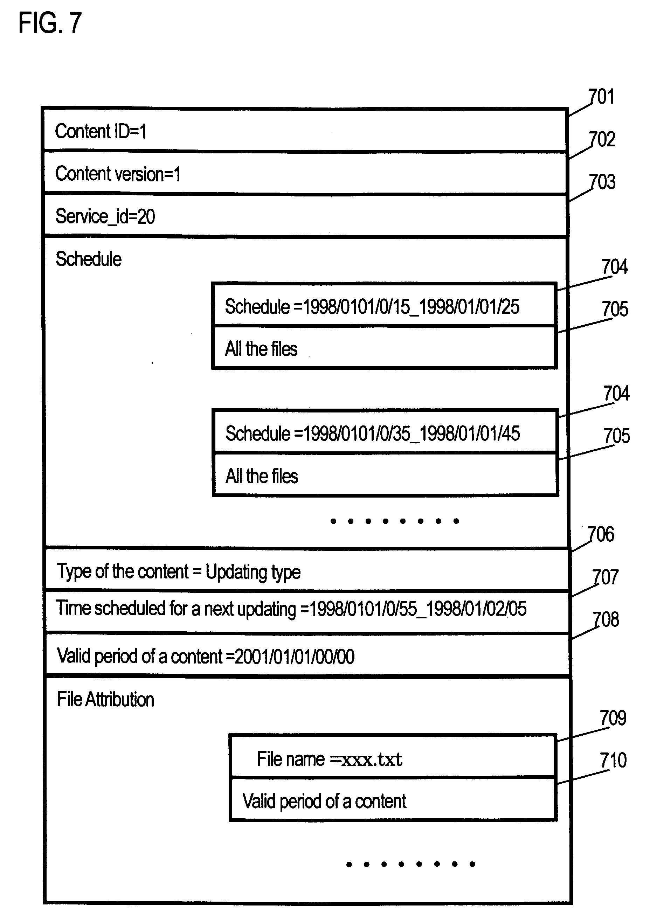

Fig. 7 shows a structure of data constituting a content-distribution-information-table produced by content-distribution-information-creation-section 107. The content distribution information table lists content-distribution-information. The table notifies the receiving machine of a content distribution or a change in content, and is aired periodically.

Identifier 701 identifies a content. Content version 702 indicates a version of a content. A channel No. through which the content is aired is indicated by service_id. Schedule 704 shows a time of distributing a content.

Updating flag 705 indicates whether a content distribution includes "all the files" constituting the content or "changed portion only".

The information discussed above is supplied from the content schedule table controlled by distribution schedule controller 103, and CDI creator 107 produces the content distribution information table based on the information.

Column 706 indicates a type of the content. The content is grouped into two types. One is a package type content, which is not updated once it is stored in the receiving machine. The other is an updating type content, which is updated by updating information from the station after being stored in the receiving machine.

The attributions hereinafter described are related to the updating type content, and those of the package type content are omitted.

Column 707 indicates a time scheduled for a next updating (a content version is updated)

Column 708 indicates a valid period of a content. All the files constituting a content stored in the receiving machine are deleted when this valid period is over.

Column 709 indicates a file name.

Column 710 indicates a valid period of a file, which tells until when a stored mono-media data (file) can be stayed in the receiving machine. The receiver automatically deletes a file over this valid period by referring to the valid period.

The operator inputs the information discussed above through the operation terminal (not shown).

SI creator 105 creates SI information by using the program organizing information managed by the program control section. At this time, when a service or an event is a content to be distributed, a content ID is added to SI table in order to identify the content.

In a case of DVB, a service (or an event) identified with a service ID (or EIT) is provided with a content ID and a content size on SDT (or EIT) table. Since a content size is a totaled file sizes, sizes of files to be distributed can be totaled by referring to the content control table of CDB 102 and DS creator 103.

In this embodiment, a program is defined as a weather report for the sake of convenience, and a program information table (EIT of DVB) among SI information is provided with a content title of "weather report", a content ID and a content size.

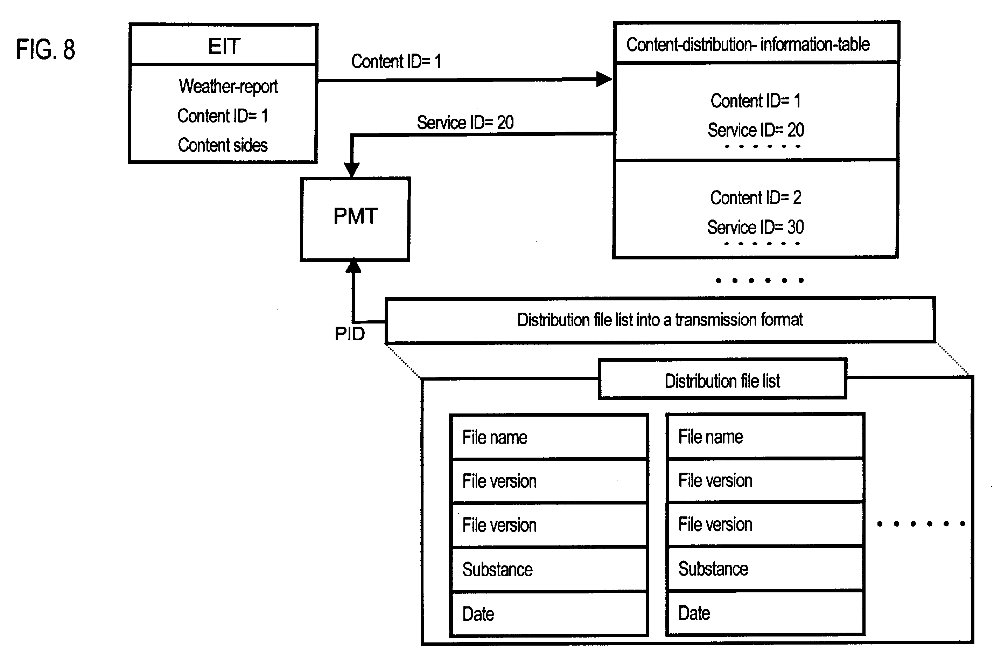

The information to be distributed is produced following the procedure discussed above, whereby inter-relation among the information provided from TP creator 106, CDI creator 107 and SI creator 105 to transmitter 108 is formed as shown in Fig. 8. The receiving machine receives a content

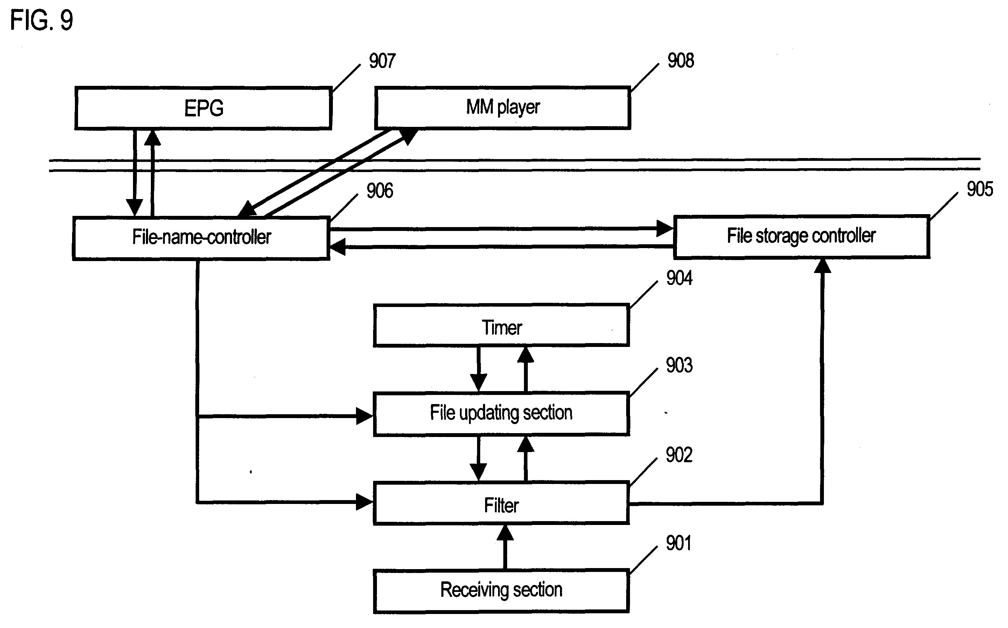

Fig. 9 is a block diagram of a receiving machine that receives contents. Receiving section 901 receives a table aired by a broadcasting station and a content converted into a transmission protocol (hereinafter generally called "data").

Filter 902 selects data to be taken into the receiving machine out of aired data.

File updating controller 903 automatically updates a content.

Timer 904 notifies EPG application 907 of an instructed time.

File storage controller 905 converts a file sent in a transmission format into an original file format, and stores the file in the original file format.

File name controller 906 controls names and locations of files, and provides an application on an upper level of a hierarchy system with a general purpose interface.

Upper level applications are EPG 907 (electronics program guide) and MM player 908.

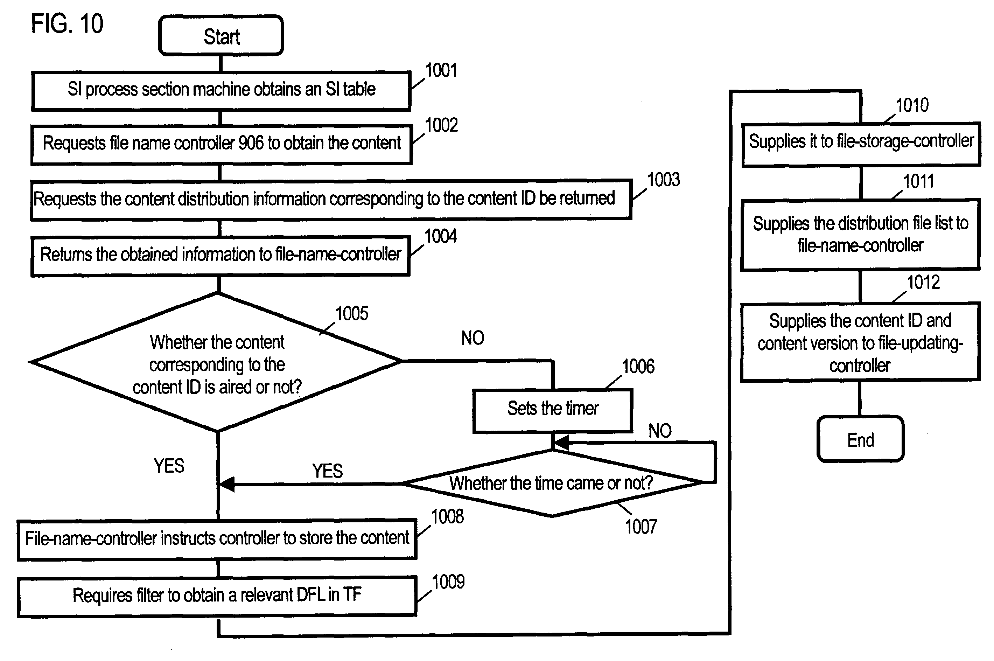

Fig. 10 is a flowchart depicting a process by the receiving machine to receive a content of "weather report" through to store it therein.

This example shows that an EPG application demands to be stored. An application other than EPG application obtains SI information and can demand the storage by using the obtained information.
Step 1001: SI process section (not shown) of the receiving machine obtains an SI table, and supplies it to EPG application 907.
Step 1002: EPG application 907 refers to the weather report of the SI information, and uses the title name, i.e. "weather report", a content ID and a location of storage device as parameters, thereby requesting file name controller 906 to obtain the content. A storage location of the content is decided by the application.
Step 1003: File name controller 906 provides filter 902 with a content ID, and obtains a content distribution information table, thereby requesting the content distribution information corresponding to the content ID be returned.
Step 1004: Filter 902 selects a content-distribution-information-table out of the data received by receiving section 901, and further obtains the content distribution information corresponding to the content ID by using the content ID, then returns the obtained information to file-name-controller 906.
Step 1005: File-name-controller 906 monitors the obtained content distribution information to check whether the content corresponding to the content ID is aired or not. When the content is aired normally, go to Step 1008.
Step 1006: When the content corresponding to the content ID is not aired, controller 906 selects one of the distribution schedules in the content distribution information, and sets the timer 904 so that the timer gives a notice when the time comes. Then, file-name-controller 906 notifies EPG application 907 of this time setting. A user can select the time for receiving the content depending on GUI of EPG application 907.
Step 1007: Controller 906 waits for the set time without processing anything about the distribution. During the waiting time, if the receiving machine is powered off, only the timer works and activates the receiving machine when the time comes.
Step 1008: File-name-controller 906 supplies a storage location, which was provided by EPG application on Step 1001, to file-storage-controller 905, and instructs controller 905 to store the content.
Step 1009: File-name-controller 906 requires filter 902 to obtain a relevant DFL in TF by using service_id in the content distribution information.
Step 1010: Filter 902 obtains a relevant DFL in TF constituting the content from receiving section 901 by using service_id, and supplies it to file-storage-controller 905.
Step 1011: File-storage-controller 905 converts the obtained DFL in TF into the original-distribution-file-list-format, which comprises file names, file versions, file substances and dates. Controller 905 stores all the obtained files in the storage location designated by controller 906 on Step 1008. After storing the files, controller 905 supplies the distribution file list to file-name-controller 906.
Step 1012: File-name-controller 906 monitors the content distribution information obtained in Step 1005, and supplies the corresponding content ID and content version to file-updating-controller 903, then instructs controller 903 to update the ID and version automatically.

On step 1001, when the storage location is assigned to a RAM, a file is stored in the memory. If an application needs a real-time access, a storage location is desirably assigned to a memory, so that the application can access fast a mono-media data.

File-name-controller 906 utilizes the distribution file list supplied from file-storage controller 905 on Step 1010, thereby controlling a file-location-table which maintains the corresponding relation between title names, file names and their stored locations.

File-name-controller 906 also monitors valid periods of the contents and files obtained from the content distribution information. Controller 906 deletes the contents and files over the valid period from the storage device in the receiving machine. As such, using the content ID, controller 906 can obtain files constituting the content.

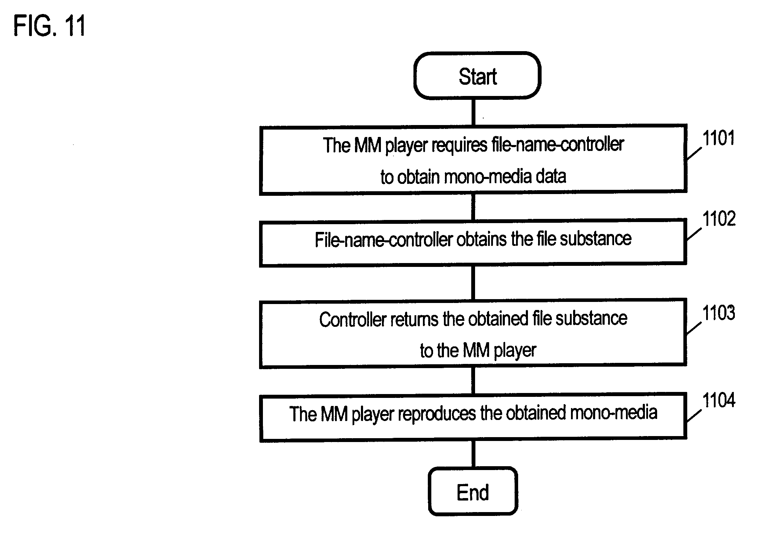

Fig. 11 is a flowchart depicting a process of the MM player for reproducing the content of weather report.
Step 1101: The MM player requires file-name-controller 906 to obtain mono-media data by using a title name and file name.
Step 1102: File-name-controller 906 looks up stored location of a file substance by using the title name and file name from a file-location-table, and obtains the file substance.
Step 1103: Controller 906 returns the obtained file substance to the MM player.
Step 1104: The MM player reproduces the obtained mono-media.

In this embodiment, obtaining a content is separated from reproducing the content; however, a content can be obtained as shown in Fig. 10 while a content is reproduced. As such, the MM player can obtain mono-media data with a title name and a file name.

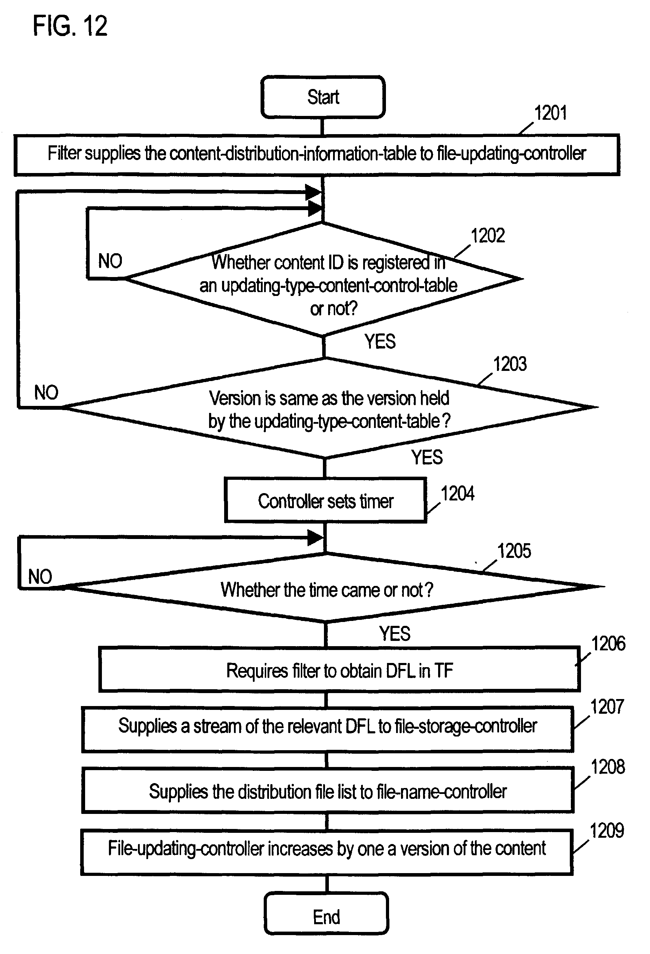

Fig. 12 is a flowchart depicting an operation of the receiving machine when some (e.g. weather information file) of the content, i.e. weather report, is updated.

As Fig. 10 depicts, in the case of an updating type content, file-name-controller 906 supplies a content ID and a content version to file-updating-controller 903. Controller 903 holds and controls corresponding relations of these elements in an updating-type-content-control-table.
Step 1201: Filter 902 obtains the content-distribution-information-table regularly, and supplies it to file-updating-controller 903.
Step 1202: Controller 903 checks on whether a content ID sent from content-distribution-information is registered in an updating-type-content-control-table or not. If it is not registered, return to Step 1201.
Step 1203: Controller 903 compares versions of content ID, and checks whether a version sent from the content-distribution-information is same as the version held by the updating-type-content-table. When same, return to Step 1201.
Step 1204: Controller 903 refers to a distribution schedule sent from the content distribution information, and selects one of the schedules on the content-distribution-information. Then
Step 1205: Controller 903 waits until the set controller 903 sets timer 904 so that timer 904 gives a notice when the time comes. time comes without further processing the distribution. During the waiting time, even if the receiving machine is powered off, only the timer woks and activates the receiving machine when the time comes.
Step 1206: Filter-updating-controller 903 requires filter 902 to obtain the content-distribution-information again from filter 902, and also obtain DFL in TF by using service_id.
Step 1207: Filter 902 selects a stream of the relevant DFL in TF from receiving section 901 by using service_id, and supplies it to file-storage-controller 905.
Step 1208: File-storage-controller 905 converts the distribution-file-list including the file name and file substance in the obtained DFL in TF into the original format. Controller 905 stores all the obtained files in the storage location designated by controller 906 on Step 1008. After storing the files, controller 905 supplies the distribution file list to file-name-controller 906.
Step 1209: File-updating-controller 903 increases by one a version of the content on the updating-type-content-table.

When a content version held by file-updating-controller 903 is older by one than that of on the content-distribution-information, a "selective" download schedule is desirably selected from the content-distribution-information, thereby realizing an efficient download.

In the cases other than discussed above, "all files" download schedule is selected.

On Step 1203, when a content version is not updated yet, and further, the time scheduled for updating does not come yet, the scheduled time is set at timer 904, and the process on Step 1206 is continued when the timer gives the notice that the scheduled time comes.

This updating function can automatically update the weather information file, so that the "weather report" application can be realized. The MM player, which operates the "weather report" application, does not relates to the automatic updating. It only practices the read-in of the weather information file. The updating function of the content distribution discussed above can re-write the substance of the weather information file, so that the latest weather information can be always obtained. Since the content distribution of the present invention updates a file, an application producer produces an updating-type application as if it were a regular package-type application.

### (Exemplary Embodiment 2)

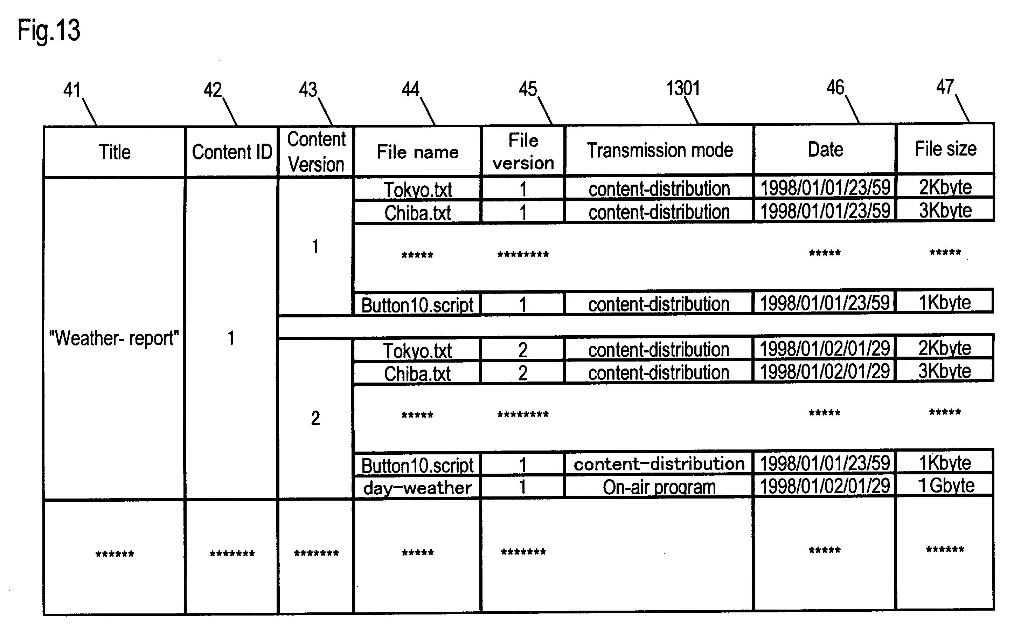

Fig. 13 shows content-control-table extended for accommodating an ordinary on-air program as a file, the table is controlled by CDB 102. Column 1301 indicates transmission modes. A transmission mode of the file transmitted by a protocol created by TP creator 106 is "content distribution", and that of a stream transmitted as an ordinary program is "on-air program". Fig. 13 shows that an on-air program titled "day-weather" is registered as a file to weather report version 2.

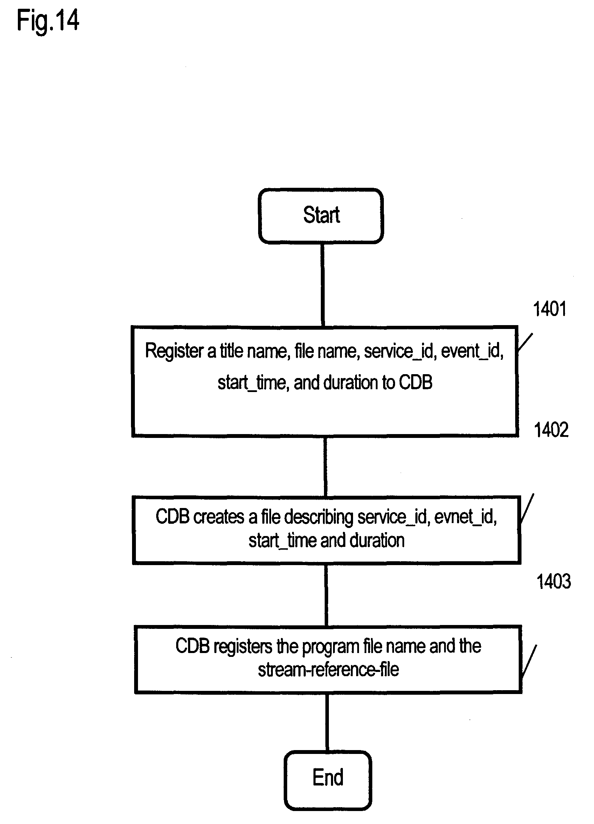

Fig. 14 is a flowchart depicting a process when an on-air program is registered to CDB 102. The on-air program is identified with SI information. In this embodiment, the program is in accordance with DVB, and identified with a service (service_id), a program (event_id), a program start time (start_time) and a program on-air time (duration). A program is handled as a kind of file by the present invention.
Step 1401: Register a title name, file name, service_id, event_id, start_time, and duration to CDB 102. The title name is a title of the content comprising this program. The file name is used when the MM application in the receiving machine handles the program.
   In the example of Fig. 13, the title name is "weather report" and the file name is "day weather".
Step 1402: CDB 102 creates a file describing service_id, evnet_id, start_time and duration. This file is utilized when the program is stored (recorded) automatically in the receiving machine, and called a "stream-reference-file".
Step 1403: CDB 102 registers the program file name and the stream-reference-file produced on Step 1402 to an entity of the content corresponding to the title name. Transmission mode is "on-air program".

The stream-reference-file is converted into a transmission format by TP creator 10 as same as an ordinary file, and aired. At this moment, a transmission mode is added as an element of the file list, which was discussed in the first exemplary embodiment.

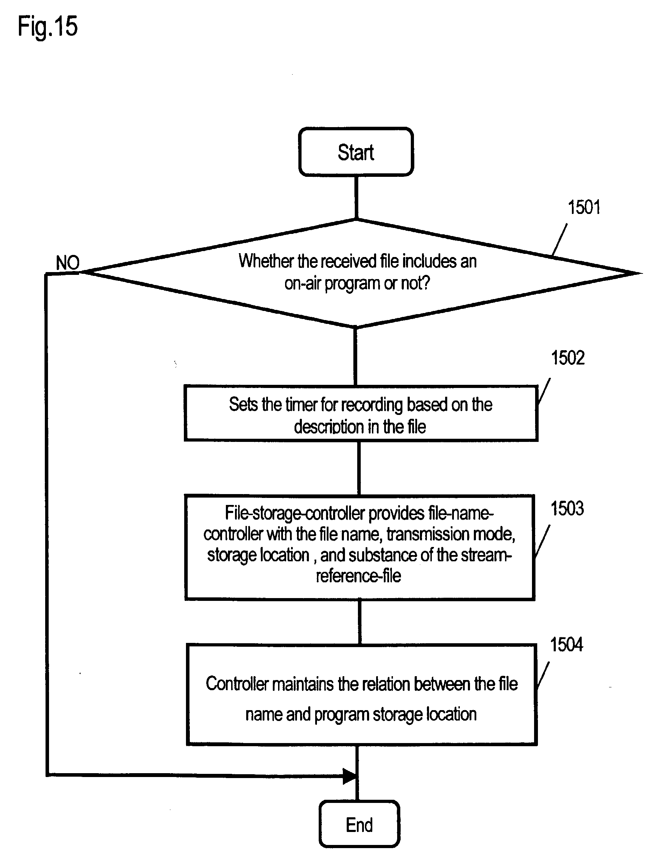

Fig. 15 is a flowchart depicting a process by file storage controller 905 after the receiving machine receives an aired stream-reference-file.
Step 1501: File-storage-controller 905 refers to a transmission mode, and checks whether the received file includes an on-air program or not. When the file includes it, follow the steps bellow.
Step 1502: File-storage-controller 905 reads this reference file, and sets the timer for recording based on the description in the file. At this moment, controller 905 obtains the storage location (or an ID which the program storage device puts to the program) from the program storage device, i.e. a recording device.
Step 1503: File-storage-controller 905 provides file-name-controller 906 with the file name, transmission mode, storage location obtained in Step 1502, and substance of the stream-reference-file.
Step 1504: Controller 905 maintains the relation between the file name and program storage location.

File-name-controller 905 holds a stream-file-control-table in order to control the on-air program.

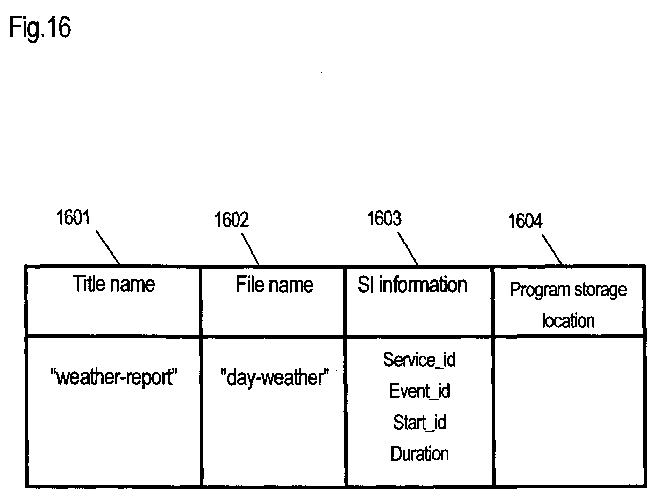

Fig. 16 shows a stream-file-control-table controlled by file-name-controller 906 to control the stream-reference-file.

Column 1601 indicates a title name of a content. Column 1602 indicates a file name. Column 1603 indicates an SI information including service_id, evnet_id, start_time and duration. Column 1604 indicates a program storage location.

When the MM player requires file-name-controller 905 to access the on-air program by using the title name and file name, controller 905 reproduces the stream stored at the program storage location corresponding to the file name in the program storage device.

When the on-air program is airing and also being recording in the storage device, controller 905 tunes the channel to the program by using the SI information, and reproduces not the stored stream but the stream now being aired.

If the time is before the start time of the program (start_time), controller 905 returns an error of unable to reproduce, so that the MM player can set timer 904 with ease to record an on-air program.

The present invention can handle a stream as a file, and the weather report application thus can be linked to "day-weather" which is actually aired.

An application producer puts a file name to a program, and registers the SI information to the content-control DB. The receiving machine automatically store the programs related to the application. As a result, a service linking an application with an on-air program can be realized.

### (Exemplary Embodiment 3)

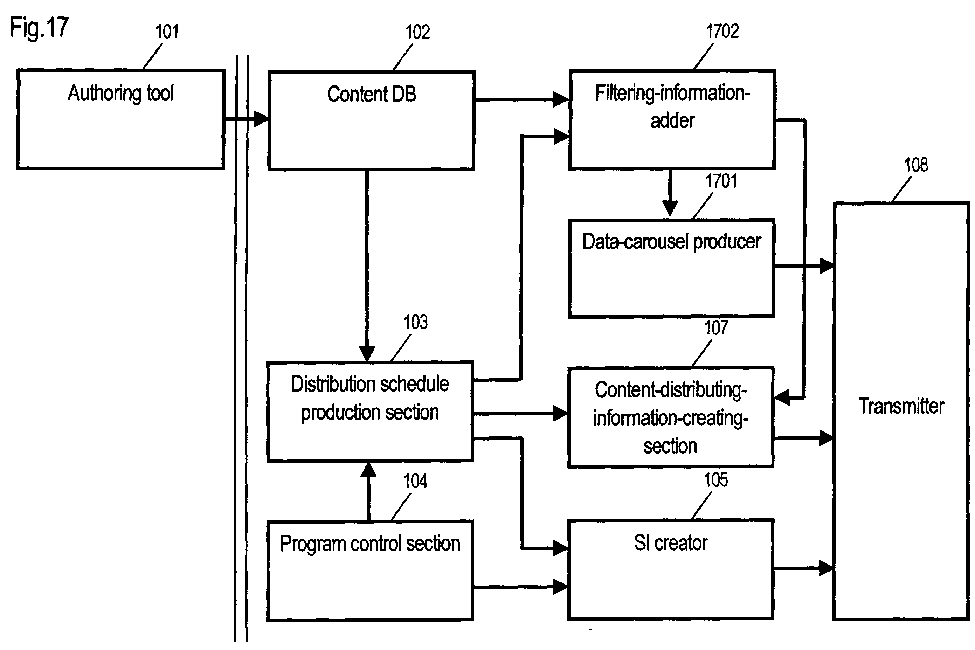

Fig. 17 is a block diagram of a broadcasting system in accordance with the third exemplary embodiment of the present invention. This broadcasting system basically has the same structure as the first exemplary embodiment, and comprises authoring tool 101, CDB 102, DS creator 103, controller 104, SI creator 105, CDI creator 107 and transmitter 108.

In Fig. 17, data carousel producer 1701 formats input-data into a data-carousel-protocol. The data carousel is a data transmission protocol in one-way network specified by ISO13818-6. Filtering information adder 1702 adds filtering-information to the data-carousel protocol, and provides CDI creator 107 with the added information.

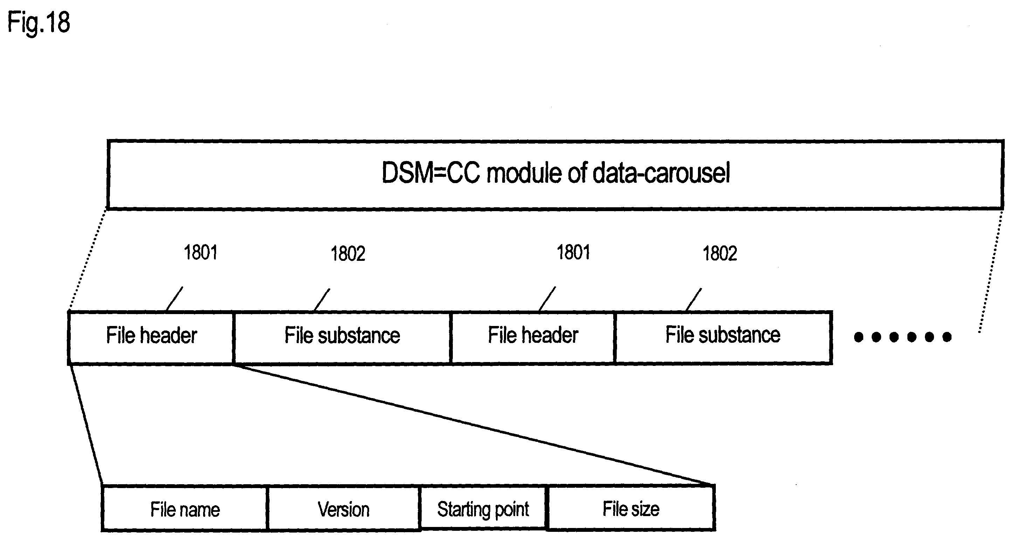

Fig. 18 shows a format with which a file is packed into a module. A plurality of files can be packed into a data-carousel-module. File header 1801 indicates a pause between files, and comprises a file name, file version, relative starting point of the file to the module, and file size. This format is called a distribution file list for a data carousel. File substance 1802 follows the header 1801. As discussed in the second embodiment, when an on-air program is handled as a file, a transmission mode is added to file header 1801.

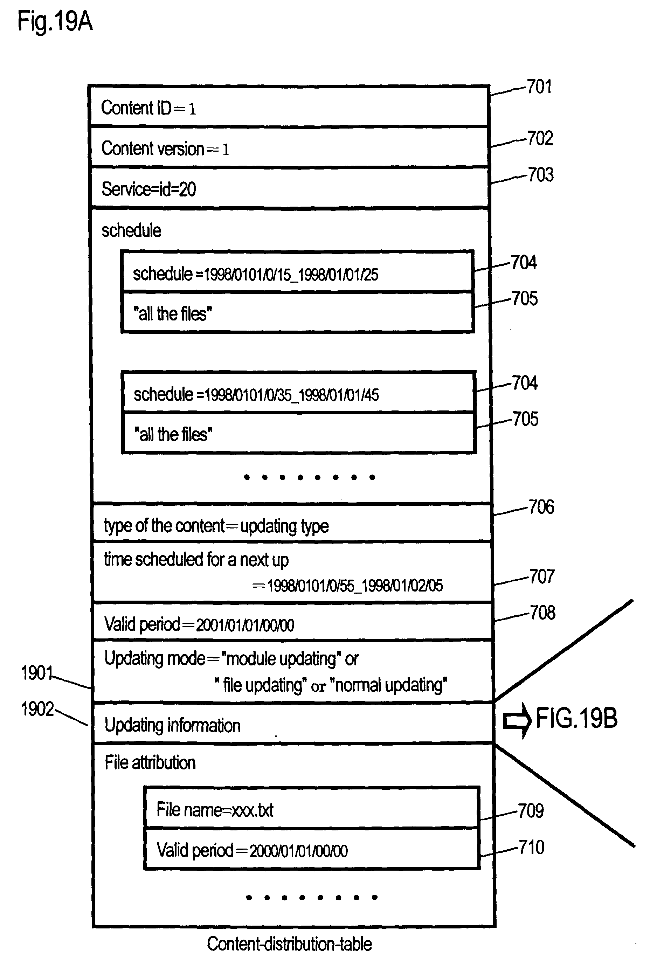

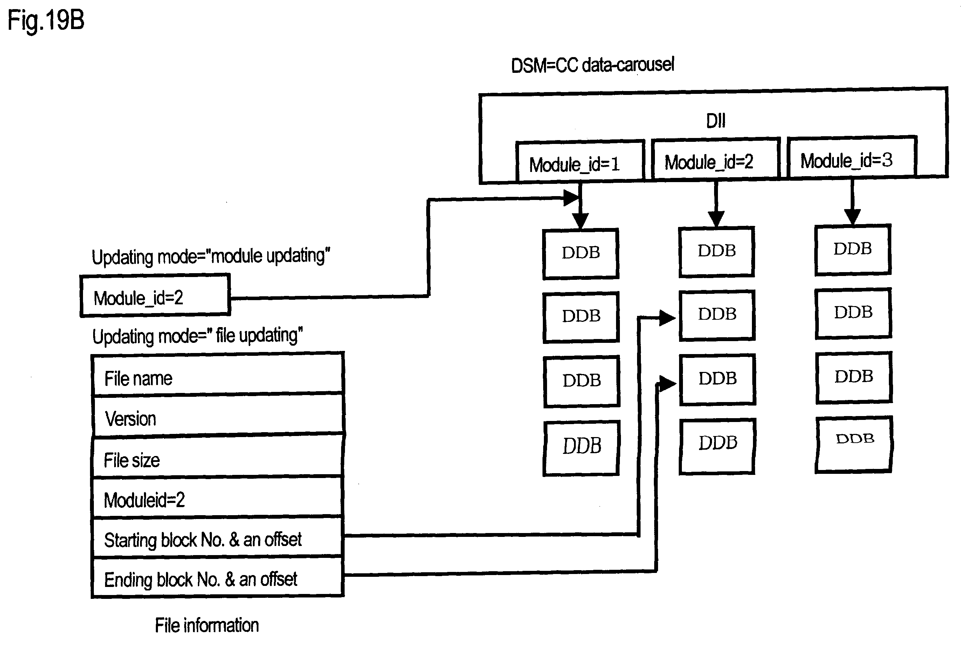

Fig. 19A and Fig. 19B show a structure of a distribution-information-table extended for filtering respective modules as well as respective files.

Updating mode 1901 indicates "module updating" or " file updating". In addition, "normal updating" is available for the content distribution by using a data carousel as regularly.

When the updating mode is "module updating", an ID list of the module to be updated is supplied to updating information1902. In a case of "file updating", file information is stored as updating information.

The file information comprises a file name, file version, file size and file storage location.

The file storage location comprises a head position of the file of the data carousel in the block and a end position of the file (block No. and an offset from the block head).

The respective processes of data-carousel-producer 1701, filtering-information-adder 1702 and CDI creator 107 are described hereinafter in the case of content distribution utilizing a module of the data carousel.

In this embodiment, the weather report application is handled as an updated file, and respective text files of the latest weather information of each area, i.e. tokyo.txt, ibaraki.txt, saitama.txt, chiba.txt, are sent as one module, and other non-updated files such as bit-map-files, other text files, and script files are sent as another module. The weather report application is distributed in such a manner as discussed above. The details are described as follows:
1. Filtering-information-adder 1702 requires data-carousel producer 1701 to put the four updated text files, i.e. tokyo.txt, ibaraki.txt, saitama.txt, chiba.txt, on the distribution-file-list for the data carousel, and then format them into a data-carousel-format as one module.
   The information (a file name, file version and file size) necessary for creating a distribution file list for the data carousel can be obtained from the content-control-table of CDB 102 as already described in the first exemplary embodiment. As discussed in the first embodiment, filtering-information-adder 1702 can notice which file is updated.
2. Data-carousel producer 1701 puts the received data into a module, and returns its module ID.
3. Filtering-information-adder 1702 requires data-carousel producer 1701 to put the remaining files on a distribution file list for the data-carousel, and formats those files to the data-carousel-format as a module.
   If the module becomes extensively large due to too many files and large file sizes, adder 1702 groups the files into appropriate sizes, and puts the distribution file for the data carousel on respective lists of each group, and stores the lists into independent modules.
4. Data-carousel-producer 1701 puts the remaining received data into a module.
5. Filtering-information-adder 1702 obtains PSI information and a distribution schedule, both necessary for data transmission, from the content-schedule-table of DS creator 103, and supplies them to data-carousel producer 1701.
6. Data-carousel-producer 1701 produces DDI, DDB transmission formats, and supplies them to transmitter 108 so that they can be aired on schedule.
7. Filtering-information-adder 1702 supplies the module ID obtained in Step 2002 to CDI creator 107.
8. CDI creator 107 creates the content-distribution-information-table shown in Fig. 19A by using the obtained module ID. At this moment, the "module updating" mode is used. The created table is supplied to transmitter 108 so that the table is aired periodically.

As such, updated files are put into a module, and a module ID is added to the content-distribution-information, whereby the receiving machine can receive all the updated files by obtaining only the modules of which module IDs are put in the content-distribution-information.

The respective processes of data-carousel-producer 1701, filtering-information-adder 1702 and CDI creator 107 are described hereinafter in the case of content distribution utilizing file information.

In this example, the weather report application is distributed, and only a weather information file "tokyo.txt" is updated. Using a module is also possible for this example, i.e. put only "tokyo.txt" into one module, however, when a number of all the files constituting the content is too many, a plurality of files must be packed into one module. In stead of this, the content distribution utilizing the file information is a useful tool in such a case. Other files, i.e. a bit-map-file, other text files, a script file, are put in another module for distribution, as described in the previous example.
1. Filtering-information-adder 1702 puts the files constituting the weather report on a list of the distribution-file for the data-carousel. If the module becomes extensively large due to too many files and large file sizes, adder 1702 groups the files into appropriate sizes, and puts the distribution file for the data carousel on respective lists of each group, and stores the lists into independent modules.
2. Data-carousel producer 1701 puts the received data into a module.
3. Filtering-information-adder 1702 obtains PSI information and a distribution schedule, both are necessary for data transmission, from the content-schedule-table of DS creator 103, and supplies them to data-carousel producer 1701.
4. Data-carousel-producer 1701 produces DDI, DDB transmission formats, and supplies them to transmitter 108 so that they can be aired on schedule. A copy of the produced DDI and DDB is stored in the storage device in producer 1701.
5. Filtering-information-adder 1702 looks up the DDB stored in data-carousel-producer 1701, and checks where the file name "tokyo.txt" is stored, e.g. from which spot of which block and to which spot of which block, then supplies the check result, file name (tokyo.txt), version, file size to CDI creator 107.
6. CDI creator 107 utilizes location information in DDB of "tokyo.txt", and creates the content-distribution-information-table shown in Fig. 15. In this case, the "file updating" mode is used. Creator 107 then supplies the created table to transmitter 108 so that the table can be aired periodically.

In this example, filtering-information-adder 1702 looks up DDB of the file "tokyo.txt" to find its location. Another way is available as follows; If adder 1702 notices data-carousel-producer 1701 in advance of the fact that file "tokyo.txt" is to be filtered, then producer 1701 stores the location of the file "tokyo.txt". For instance, from which point, block, and module does this file start, and at which point, block doe this file end? Producer 1701 then inform adder 1702 of the stored location.

In this exemplary embodiment, the file information is put on the content-distribution-table before being distributed; however, the file information can be put in a "moduleInfo" area of DII of DSM-CC carousel, and then is distributed.

When a content is distributed, an operator selects a distribution mode out of the following three modes by operating filtering-information-adder 1702 through an operation terminal (not shown):
(a) distribution using modules;
(b) distribution using file information; or
(c) distribution using regular data-carousel.
The most efficient distribution mode depends on an application.

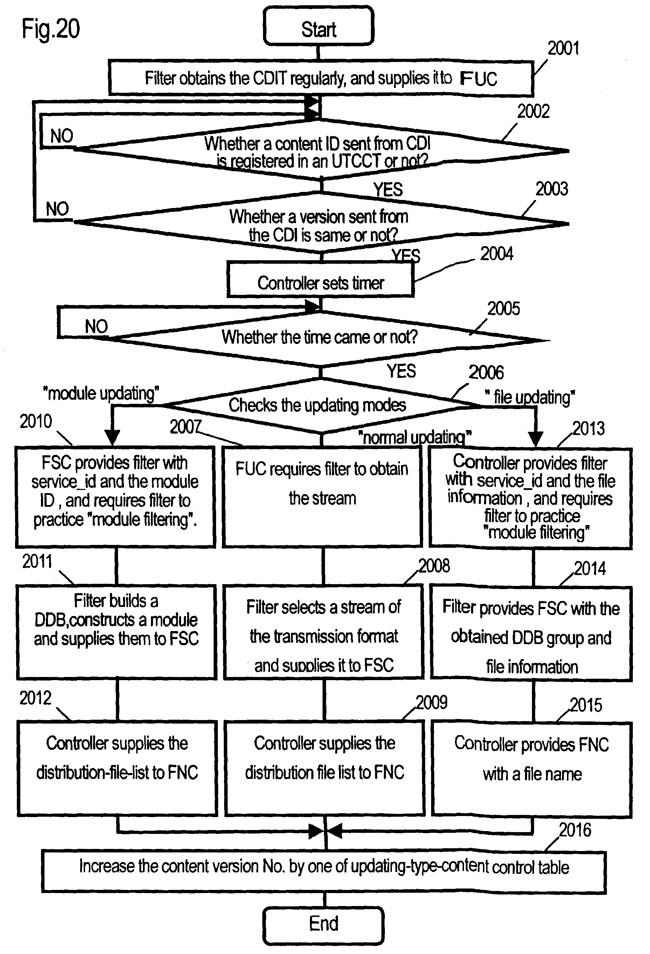

Fig. 20 is a flowchart depicting a process of updating the received content-distribution-information-table by the receiving machine. As described in Fig. 12, in the case of an updating type content, file-name controller 906 supplies a content ID and a content version to file-updating-controller 903. Controller 903 holds and controls corresponding relations of these elements in an updating-type-content-control-table.
Step 2001: Filter 902 obtains the content-distribution-information-table (CDIT) regularly, and supplies it to file-updating-controller(FUC) 903.
Step 2002: Controller 903 checks on whether a content ID sent from content-distribution-information(CDI) is registered in an updating-type-content-control-table(UTCCT) or not. If it is not registered, return to Step 2001, and when it is registered, go to Step 2003.
Step 2003: Controller 903 compares versions of content ID, and checks whether a version sent from the content-distribution-information(CDI) is same as the version held by the updating-type-content-table. When same, return to Step 2001, and when different, go to Step 2004.
Step 2004: Controller 903 refers to a distribution schedule sent from the content distribution information, and selects one of the schedules on the content-distribution-information. Then controller 903 sets timer 904 so that timer 904 gives a notice when the time comes.
Step 2005: Controller 903 waits until the set time comes without further processing the distribution. During the waiting time, even if the receiving machine is powered off, only the timer woks and activates the receiving machine when the time comes.
Step 2006: File-updating-controller 903 checks the updating modes on the content-distribution-information, and when the mode is "module updating", go to Step 2010, and when the mode is "file updating", go to Step 2013. In the case of "regular mode", go to Step 2007.
Step 2007: Filter-updating-controller (FUC) 903 requires filter 902 so that filter 902 can obtain the stream in which the files constituting the content formatted in transmission format by using service_id.
Step 2008: Filter 902 selects a stream in the transmission format, which stores the files constituting the relevant content, from receiving section 901 by using service_id, and supplies it to file-storage-controller(FSC) 905.
Step 2009: File-storage-controller 905 converts the distribution-file-list in the obtained transmission format into the original format. Controller 905 stores all the obtained files in the storage location. After storing the files, controller 905 supplies the distribution file list to file-name-controller(FNC) 906.
Step 2010: File-storage-controller (FSC)905 provides filter 902 with service_id in the content-distribution-information and the module ID in the updating information of content-distribution-information, and requires filter 902 to practice "module filtering".
Step 2011: Filter 902 obtains DII by utilizing service_id, then obtains only the DDB constituting the relevant module by filtering with the module ID. Filter 902 builds a DDB, constructs a module and supplies them to file-storage-controller(FSC) 905.
Step 2012: Controller 905 takes out the list including an original file name and file substance from the obtained module, then stores all the obtained files in the storage device e.g. a program recording device or a server. After storing the files, controller 905 supplies the distribution-file-list to file-name-controller(FNC) 906.
Step 2013: In the case of"file updating" mode, controller 905 provides filter 902 with service_id on the content-distribution-information and the file information in updating information of the content-distribution-information, and requires filter 902 to practice "module filtering".
Step 2014: Filter 902 obtains DII by utilizing service_id then obtains only the DDBs having desired block Nos. out of the DDBs constituting the relevant module by filtering with the module ID and block Nos. Filter 902 provides file-storage-controller(FSC) 905 with the obtained DDB group and file information.
Step 2015: File-storage-controller 905 takes out a file out of the DDB group based on the file information, and stores the obtained file in the designated location of the storage device. After storing the file, controller 905 provides file-name-controller(FNC) 906 with a file name (the file distribution list is replaced with the file information).
Step 2016: Increase the content version No. by one of updating-type-content control table.

As such, the information for filtering is added to the content-distribution-information, whereby the receiving machine can take out only a necessary portion without a selective distribution from the station.

### (Exemplary Embodiment 4)

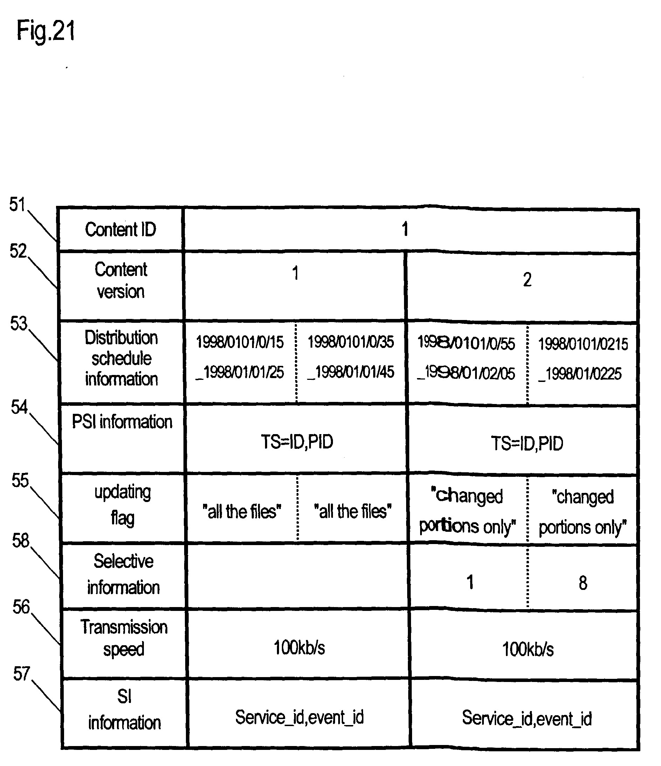

Fig. 21 illustrates the fourth exemplary embodiment. DS creator 103 used in the first exemplary embodiment controls the content-schedule-information (shown in Fig. 5), of which data structure is extended by adding selective information 58 including a changed portion. The schedule information shown in Fig. 5 has only two modes; i.e. "all" and "selective" responsive to updating flag 55. The receiving machine thus cannot know that which content version 52 needs this changed portion selectively transmitted. In the case of Fig. 5, the receiving machine is always powered on, and is forced to receive all the content information. Selective information 58 is added to this case, whereby the receiving machine can determine whether this selective information is needed by one of the contents under its own control or not by analyzing selective information 58. If selective information 58 is transmitted while the receiving machine is turned off, then the information is not received by the machine, however, the machine can check selective information 58 in the next turn, and determine whether the information is needed by one of the contents under its own control.

Selective information 58 should be sent to each content version 52. In this case, selective information 58 becomes extensively large, and requires a wide bandwidth in the transmission line. Some selective information may be needed after a certain version by all the contents. In order to accommodate this situation, the content-schedule-information is extended by supplemental selective information 59 besides selective information 58. Since the content-schedule-information has such an extended data structure, the broadcasting station transmits the information about (a) whether the selective information is needed by specified versions, and (b) whether the selective information can be applicable to any versions after the specified version. The receiving machine thus can identify the selective information whether it is needed by the contents under its own control. The selective information can be compressed when it is transmitted. Selective information 58 can be handled by the same way as described in the first exemplary embodiment.

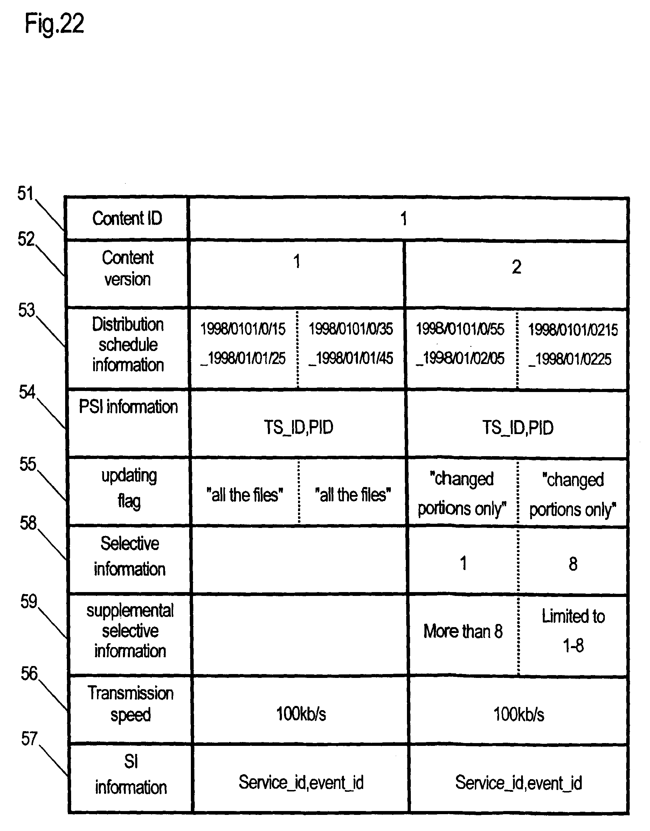

Content version 52 is not necessarily increased free from limit, but is sometimes provided with a certain range of versions due to a system's restriction. As shown in Fig. 22, a function of designating a version range is added to selective information 58 and supplemental selective information 59.

For instance, when the content version is limited to 1-8, the version coming next to version 8 should be version 1. After this, if selective information 58 shows version No. more than 8, the receiving machine that controls the content version 1 cannot accommodate selective information 58.

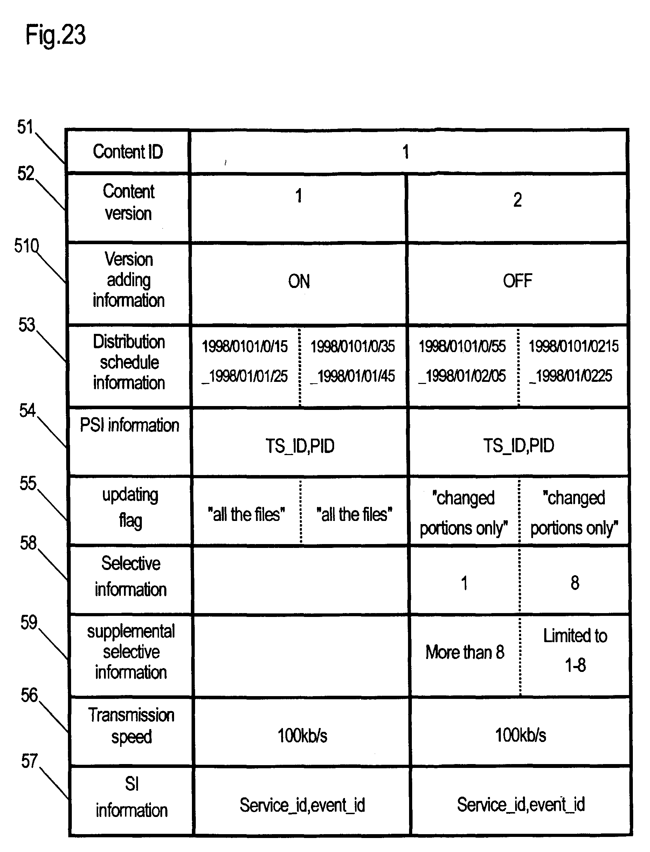

Fig. 23 shows a data structure of extended content-schedule-information to which version-adding-information 510 is added besides selective information 58 and supplemental-selective-information 59. Version-adding-information 510 is added to the content-schedule-information having such a data structure when information 510 is transmitted to the receiving machine. This structure allows the receiving machine to accommodate the selective information of which versions are 8 and onward by the following method: When version 8 turns to version 1, transmit "ON" to version-adding-information 510, then the receiving machine determines that the version 1 just arriving is actually equal to version 9.

### (Exemplary Embodiment 5)

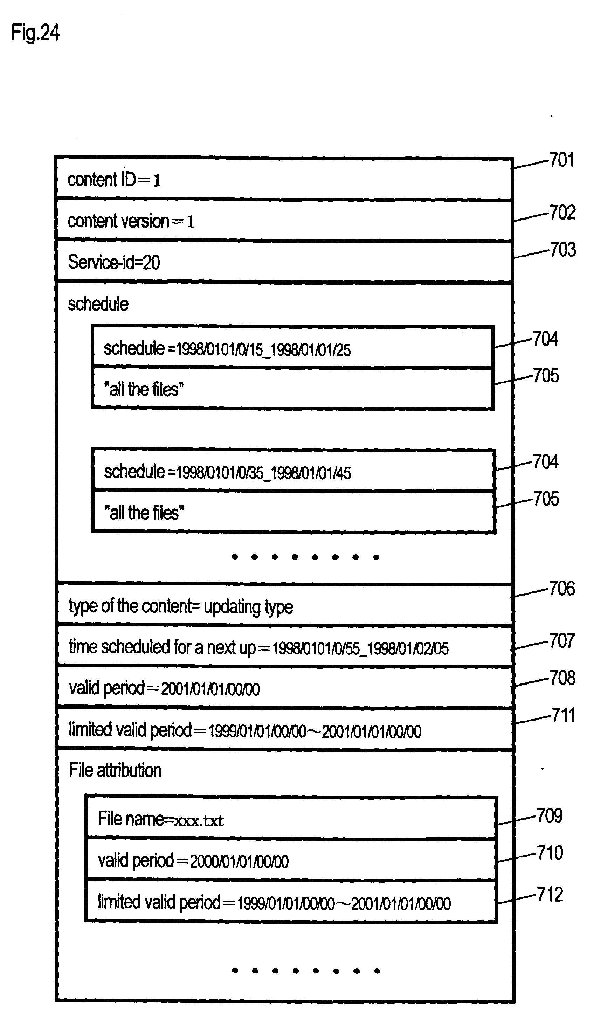

The content transmitted from a broadcasting station is accompanied by a content-distribution-information-table having a data structure shown in Fig. 7. In the example shown in Fig. 7, the receiving machine can use the content as long as the content is still within a valid period. Contents can be stored until a validity is expired. However, some contents only valid within a specified period are available in the receiving machine. In order to clarify this kind of valid period of respective contents, limited-valid-period-information 711 is added to the content-distribution-information-table created by CDI 107. Fig. 24 shows a data structure of this extended table. Regarding the file attribution of the content on the content-distribution-information-table, file name 709, valid period 710 and limited-valid-period 712 are additionally described.

Regarding the limited valid period, e.g. every Sunday only, 12:00-13:00 everyday, or 17:00-18:00 on every Monday and the first day of every month, can be set. Other forms available as follows; e.g. within one day of receipt by the receiving machine, within one operational hour of receipt by the receiving machine, or during on-air time of a specified program.

File-storage controller 905 or file-name-controller 906 shown in Fig. 9 determines this limited valid period. Processes other than this limited valid period are same as those in the second and third embodiments.

The present invention as discussed in the first through fifth embodiments realizes a content distribution independent of an authoring tool by controlling a mono-media-data and a content in an integrated manner as a file and a group of files at the station and the receiving machine. When the authoring tool is changed in a center system, the content distribution section is thus free from any changes, which can minimize the cost incurred by the changes. The technique according to the present invention is effective for building a system of the data broadcasting that is developing and will encounter various changes from now on.

Since the content-distribution of the present invention is independent of the authoring tool, contents produced by various authoring tools can be simultaneously distributed.

Since the content-distribution of the present invention supports an automatic updating function of files, a content producer can produce a time-variying application similar to an on-air program by utilizing the know-how of regular package type application. For instance, when an application such as a weather report of which data varies with the time is produced, the weather report application per se is produced by the same way of producing a regular package-type application (non-updated application). After the distribution of the application, the files of which authoring tools are changed are registered to the content DB, whereby the content-distribution can air the updated file on schedule, and the receiving machine can update them automatically.

When the data carousel is used as a transmission method in the present invention, the receiving machine can selects only necessary files out of the aired data thanks to the filtering information which is newly added in the present invention. As a result, the content can be received efficiently.

Authoring and a method of content distribution are closely related in the conventional data broadcasting system, which thus has a little expandability. On the other hand, the data broadcasting system of the present invention can be extensively expanded, and a content producer can produce the content similar to an on-air program, of which detail varies with the time, with ease and free from worrying about the distribution.

## Claims

1. A broadcasting system for transmitting and distributing data constituting a content, said broadcasting system comprising:
a content data base for storing a content;
a content transmission protocol creating section for converting the content stored in said content data base into a transmission format;
a transmitter for transmitting created information.

2. The broadcasting system as defined in Claim 1 further comprising a distribution-schedule-production section for producing a schedule of distributing the content.

3. The broadcasting system as defined in Claim 2 further comprising a content-distribution-information-creating-section for a receiving machine to obtain and update the content, wherein said broadcasting system transmits content-distribution-schedule-information.

4. The broadcasting system as defined in Claim 3 further comprising:
a program control section for controlling an on-air program information; and
an SI creator for creating information supplementary to a program by using the on-air program information,
wherein said program control section controls a time-range of content distribution as an on-air program,
wherein said SI creator creates a content-distribution-program-information, and wherein said broadcasting system also transmits the program supplementary information.

5. The broadcasting system as defined in Claim 4 wherein said system stores data together with at least one of a content identifier for identifying a content to be stored in said content data base and an in identifier of data constituting the content.

6. The broadcasting system as defined in Claim 5 wherein a title name of the content utilized by an application which activates the content at the receiving machine is used as the content identifier, and a data name utilized by an application which accesses the data at the receiving machine is used as the data identifier.

7. The broadcasting system as defined in Claim 4 further comprising a content data base for controlling a content version and a version of the data constituting the content.

8. The broadcasting system as defined in Claim 4 wherein said content-distribution-information-creating-section creates a transmission format of the content-distribution-schedule utilized by the receiving machine when the receiving machine obtains and updates the content, wherein said system transmits also the content-distribution-schedule-information.

9. The broadcasting system as defined in Claim 4 wherein said content-distribution-information-creating-section creates a transmission-format of a version information of the content utilized by the receiving machine when the receiving machine obtains and updates the content, wherein said system transmits also the content-version-information.

10. The broadcasting system as defined in Claim 4 wherein said content-transmission-protocol-creating-section puts a data identifier and data substance of the data constituting the content on a list, and converts thereof into a transmission format.

11. The broadcasting system as defined in Claim 4 wherein said content-distribution-creating-section determines which distribution mode is used, i.e. one of "all files" constituting the content and "selective", and transmits information accordingly.

12. The broadcasting system as defined in Claim 11 wherein said content-distribution-information-section creates information of content distribution mode, and transmits thereof.

13. The broadcasting system as defined in Claim 12 wherein when the "selective" mode is used, said content-distribution-information-creating-section creates selective information that shows which content version needs the "selective" distribution based on the content-distribution-mode information, and transmits the selective information.

14. The broadcasting system as defined in Claim 13 wherein said system produces and transmits supplemental selective information that shows the selective information is needed by one of specified versions of contents and a plurality versions of content.

15. The broadcasting system as defined in Claim 4 wherein said content-distribution-information-creating-section creates information of valid period in the receiving machine of the content and data constituting the content, wherein said system transmits the information of valid period.

16. The broadcasting system as defined in Claim 4 wherein said content-distribution-information-creating-section creates a next updating schedule of the content, wherein said system airs the next updating schedule of the content.

17. The broadcasting system as defined in Claim 16 wherein said system produces on-air type multi-media application which provides users with a latest weather report by updating weather information data periodically.

18. The broadcasting system as defined in Claim 4 wherein said content data base produces link data to be linked with an on-air program, wherein said link data includes a program identifier, channel identifier, program start time, and program on-air period, which are included in the information supplementary to the program, wherein said content data base controls said link data so that the on-air program is one of data constituting the content, wherein said system airs said link data as one of data constituting the content.

19. The broadcasting system as defined in Claim 4 wherein a data carousel producer for producing a data carousel protocol is employed as said content-transmission-protocol-creating-section, wherein said system is equipped with a filtering-information-adder for controlling a filtering method of the data carousel protocol.

20. The broadcasting system as defined in Claim 19 wherein said filtering-information-adder controls putting all updated data into a specified module.

21. The broadcasting system as defined in Claim 20 wherein said content-distribution-information-creating-section adds the filtering information which controls putting all the updated data into the specified module, and produces updating module information for airing module information to the receiving machine.

22. The broadcasting system as defined in Claim 21 wherein said content-distribution-information-creating-section adds filtering information for obtaining data location information which identifies in which place of the data-carousel-format the data is stored so that the receiving machine can filter specified data only, and produces updating module information for airing data-location-information to the receiving machine.

23. The broadcasting system as defined in Claim 4 wherein said transmitter controls a distribution timing of a new file, and allows an application producer to produce a content free from worrying about a file updating method.

24. The broadcasting system as defined in Claim 4 wherein said system produces an on-air type multi-media application by handling an on-air program as link data, and said application records automatically a program of link data linked with a type of program, said type a user selects.

25. The broadcasting system as defined in Claim 4 wherein when a number of content versions are limited, supplemental version information indicating that the version number takes one round is produced and transmitted.

26. The broadcasting system as defined in Claim 4 wherein said content-distribution-information-creating-section produces a limited-valid-period besides the valid period during which one of the content and data constituting the content can be used at the receiving machine, wherein said system transmit the limited-valid-period.

27. A receiving machine comprising:
a receiving section for receiving data aired from a broadcasting station;
a filter for selecting data, to be taken into said receiving machine, out of aired data; and
a file-storage-controller for converting a transmitted file in a transmission format into an original file format, and stores the converted file in a storage device.

28. The receiving machine as defined in Claim 27 further comprising file-updating-controller for controlling a content version in said receiving machine, and updates the content automatically when the receiving machine receives content-version-information from the broadcasting station.

29. The receiving machine as defined in Claim 28 further comprising a timer for setting a time to receive a content by using content distribution schedule information distributed from the station.

30. The receiving machine as defined in Claim 29 further comprising a file-name-controller for controlling a data identifier and a location of stored data so that an upper application in a hierarchical system can obtain data by using only the data identifier free from concerns about the data location.

31. The receiving machine as defined in Claim 30 wherein said machine receives valid period information, controls a valid period of a content and a file stored in said machine, and deletes automatically a content and a file over the valid period thereof.

32. The receiving machine as defined in Claim 30 wherein said machine receives next updating schedule information of the content, sets a timer for receiving the content on schedule.

33. The receiving machine as defined in Claim 30 wherein said machine receives link data from the broadcasting station, and refers to a program identifier, a channel identifier, a program start time and on-air duration period, all of them existing in the link data, then practices to record a program at a set time by using these referred data.

34. The receiving machine as defined in Claim 30 wherein said machine controls a corresponding relation between a link data identifier received from the station and a stored location in a storage device of the corresponding program, and reproduces the program in the storage device in return for returning the data when the machine is required to obtain data with link-data-name.

35. The receiving machine as defined in Claim 30 wherein said machine controls information supplementary to the program in addition to controlling a corresponding relation between a link data identifier received from the station and a stored location in a storage device of the corresponding program, so that said machine tunes a channel to a program presently aired by using the information supplementary to the program just when the program is being recorded, instead of reproducing the program in the storage device corresponding to the link data identifier when said machine is required to obtain data with link-data-identifier.

36. The receiving machine as defined in Claim 30 wherein said file-storage-controller receives updating module information, then said machine only receives the updated module by filtering, and takes out data from the module to store thereof.

37. The receiving machine as defined in Claim 30 wherein said file-updating controller receives updating data information, then receives a specified block in a specified module by filtering, and builds the blocks to restructure the data, and stores the restructured data.

38. The receiving machine as defined in Claim 30 wherein said file-updating-controller controls whether all the data distributed in advance are re-written or only a changed portion thereof is re-written.

39. The receiving machine as defined in Claim 38 wherein said file-updating-controller which controls the data distributed in advance also controls updating a file by using supplemental selective information of received data.

40. The receiving machine as defined in Claim 39 wherein said file-updating-controller which controls the data distributed in advance also controls difference between the data having same version numbers.

41. The receiving machine as defined in Claim 40 wherein said machine utilizes a content within a limited valid period by referring to the content-distribution-information-table when the machine uses a received content.
